Europäisches Patentamt

European Patent Office

Office européen des brevets

(11) Publication number **0 018 414**
**A1**

# EUROPEAN PATENT APPLICATION

published in accordance with Art 158(3) EPC

(21) Application number: 79900479.1

(22) Date of filing: 19.04.79

Data of the international application taken as a basis:

(86) International application number:
PCT/JP79/00100

(87) International publication number:
WO 79/01007
International publication date:
29.11.79

(51) Int. Cl³ **G 09 B 5/02**
**G 09 B 11/00, G 09 B 15/00**
**G 03 B 21/00**

(30) Priority: 29.04.78 JP 51174·78

(43) Date of publication of application:
12.11.80 Bulletin 80·23

(84) Designated Contracting States.
**DE FR GB**

(71) Applicant: **ISHI, Ikuya**
**10 Kugocho 2-chome Yokosuka-shi,**
**Kanagawa 238(JP)**

(72) Inventor: **ISHI, Ikuya**
**10 Kugocho 2-chome Yokosuka-shi,**
**Kanagawa 238(JP)**

(74) Representative: **Goddar, Heinz, Dr. et al,**
**FORRESTER & BOEHMERT Widenmayerstrasse 5·IV**
**D-8000 München 22(DE)**

(54) **TRAINING METHOD AND DEVICE THEREFOR.**

(57) This invention is to remarkably enhance the training effect on the playing of an instrument such as a piano or the like or a calligraphy, handicraft or the like by projecting an exemplary image recorded on a film and simultaneously visually superposing the player's training operation on the projected image. The exemplary images are reflected by a translucent mirror. The player visually confirms the reflected images through a view finder and superposing his training operation on the reflected images with seeing through the translucent mirror

BAD ORIGINAL

./...

Croydon Printing Company Ltd

Fig. 1

(1)

# S P E C I F I C A T I O N

## Teaching Method and Device therefor

### Technical Field

This invention is for use in the audio-visual education and, more particularly, related to a self-teaching method by which one can learn and practice playing piano, calligraphy, etc., by visually and simultaneously compairing and confirming the movements of her hands or feet with the images projected and a device therefor.

### Technical Background

There have been proposed various teaching methods for playing piano, calligraphy, etc., by visually confirming projected images and following instruction given by means of the projected images. However, in almost all conventional methods and devices therefor which utilize the sense of sight, a student has to memorize the instruction shown on the projected image before she actually practices instructed movements according to the memory: therefore, a certain amount of time unavoidably passes between the model movement shown on the image and the actual movement of the student, presenting difficulty for the student to retain correct memory by the time she repeats the movement. Further, one can not confirm whether one's movement is correct or not. Accordingly, a student can achieve only a modest improvement by using such prior art methods.

Moreover, since human faculty of memory is limited to a certain extent, one can not continue understanding the image and practicing the instructed movements for a long time period.

This invention aims at providing a method and a device with enhanced effect wherein a student recognizes both the model movement recorded in a film and her own movement simultaneously without depending on her memory during the practice.

### Disclosure of the Invention

This invention concerns a self-teaching method comprising a step of reflecting a filmed image projected on a screen by a translucent mirror and a step of allowing a user (a student) to visually recognize the reflected image and at the same time to look at her own movement through the translucent mirror so that she can practice such movement repeatedly for a long time by correcting her movements to agree with the model.

The device for carrying out the above method comprises a film recording the instruction contents, a light source to project the image of the film on a screen, the translucent mirror to reflect the projected image on the screen by the light from said light source and a finder located at a position so as to make a student look at her practicing movement through the translucent mirror while recognizing the reflected image on the translucent mirror and offers remarkably enhanced educational effect.

(3)

## Brief Description of the Drawings

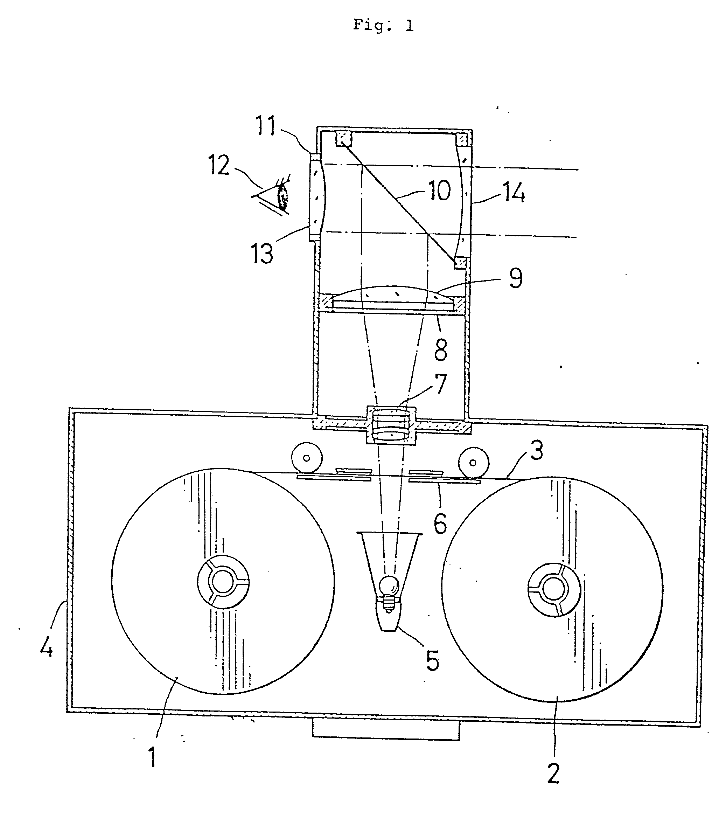

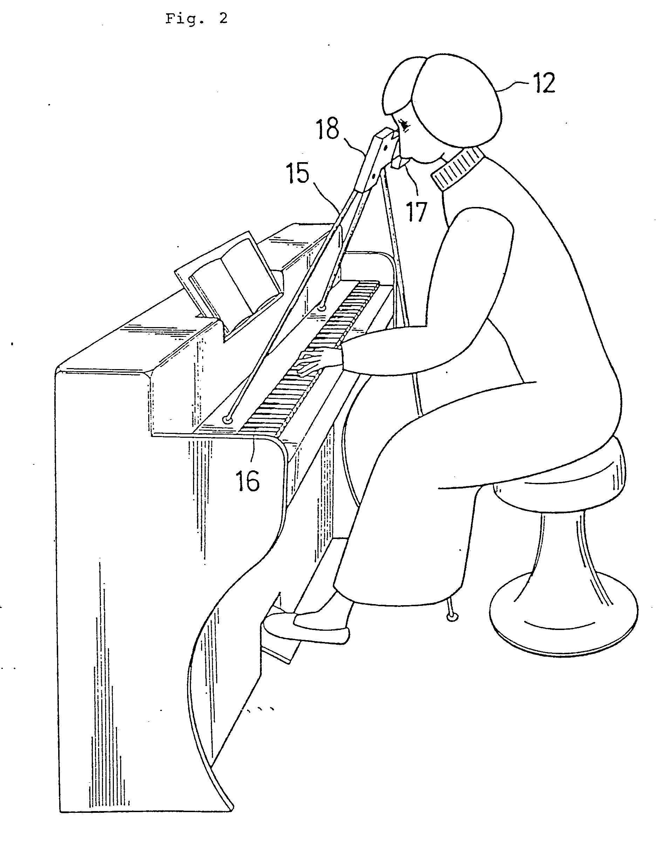

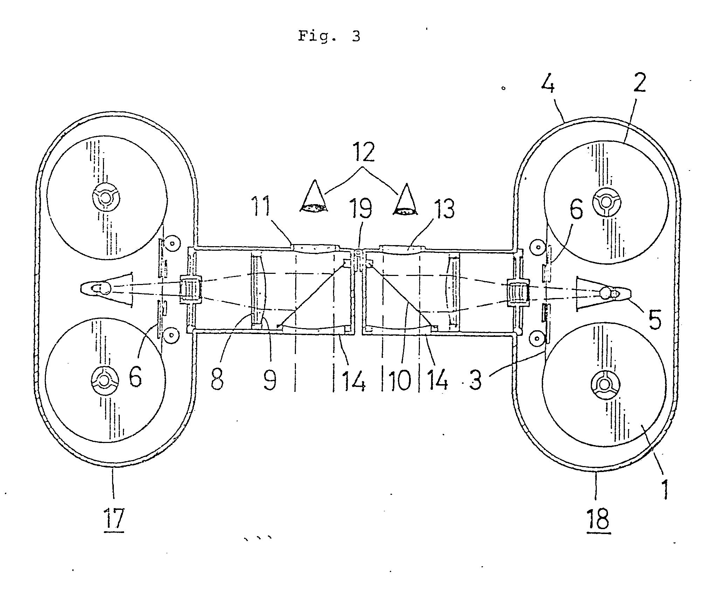

Fig. 1 is a sectional view of the self-teaching device according to the present invention, Fig. 2 is a perspective view showing how a student is learning with the device and Fig. 3 is a sectional view showing an embodiment wherein three-dimentional images are obtained.

## Preferred Embodiment to Embody the Invention

An embodiment according to this invention will now be described referring to the attached drawings wherein reference numerals 1 and 2 denote a pair of reels to store a film 3 in which the instruction is recorded, the pair of the reels being housed in a casing 4. The reference numeral 5 denotes a light source positioned at equal distance from said opposing reels and 6 denotes a film holder which slidably supports the film 3 when the film 3 is reeled out between the reels 1 and 2 so that the film 3 is made irradiated by the light source. The reference numeral 7 denotes a projection lense to project images on the screen 8 by said irradiation, 9 a condenser to guide the projected image on a screen 8 to a translucent mirror 10, and 11 a finder for a student 12 to confirm the image projected on the translucent mirror 10. The finder comprising an eye lense 13 is positioned at the angle of 45° relative to the translucent mirror and the translucent mirror 10 is positioned at the angle of 45° relative to the screen 8. The reference numeral 14 denotes an object

(4)

lense positioned in the visual direction of the finder 11 with the translucent mirror 10 interposed therebetween so that the point is forcused on the movement of the student so as to be seen through the finder 11 via the translucent mirror 10.

The device of above mentioned structure is operated as follows. The eye lense 13 of the finder 11 is first adjusted to be forcused on the image on the film 3 and then the object lense 14 is forcused on the movement of a student. When the film 3 is irradiated from the light source 5 to project the filmed image on the translucent mirror 10 through the screen 8, both model instruction projected on the translucent mirror 10 and the student's own movement looked through the translucent mirror 10 are simultaneously recognized and confirmed. The operation is applicable to various fields ranging from calligraphy (orient brush type), calligraphy, playing piano or other music instruments, making objects of practice such as painting or the like or direction for use of a device or the like. Further, it is applicable to lessons of golf or other sports where a student projects her full-length figure on a mirror while trying to make her movement agree with the model movement on the image. Fig. 2 shows one example of the ways to use the operation suitable for a practicing a piano, an organ, an electric organ or the like, wherein the device according to the present invention is supported by a tripod 15 and a student can learn and study the ideal movement of fingers on the keyboard 16 by simply making the model movement of the filmed image projected on the translucent mirror and seen through the finder 11 agree with the movement of her own fingers on the keyboard 16. In another preferred embodiment, two of the aforementioned devices 17 and 18 are connected as shown in Fig. 3 so as to allow a user to look into one finder 11 with one eye respectively, thereby making it possible to form three-dimentional film image and achieving further educational effect. Needless to say, in this case, the operations for the left and right devices need to be aligned and the film 3 has to be filmed in a stereoscopic manner. The connecting angle between the devices 17 and 18 can be adjusted by means of a hinge 19 or the like so that visual direction for the filmed image through the finder 11 and that for the real image on the keyboard 16 come to be forcused in a same direction.

## Applicability for Industry

The present invention is capable to enhance the educational effect by guiding a student to try to agree her own movement with the model movement instructed on the filmed image. It has significant effect, if used in the field of audio-visual education industry.

(6)


Claims

(1)  A self-teaching method characterized in that a film image projected on a screen is reflected by the translucent mirror, that a student sees her own practicing movement through the translucent mirror while simultaneously recognizing the reflected image and that she corrects her practicing movement so as to agree with the movement of the filmed image.

(2)  A self-teaching device comprising a film recording educational instruction, a light source to project the image of the film on a screen, the translucent mirror to reflect the projected image on the screen and a finder which is positioned at a location which allows a student to see her own movement through the translucent mirror while simultaneously recognizing the image reflected on the translucent mirror.

Fig. 1

0018414

(2/3)

Fig. 2

Fig. 3

# INTERNATIONAL SEARCH REPORT

International Application No **PCT/JP79/00100**

## I. CLASSIFICATION OF SUBJECT MATTER (if several classification symbols apply, indicate all) :

According to International Patent Classification (IPC) or to both National Classification and IPC

C09B5/02, G09B11/00, G09B15/00 G03B21/00

## II. FIELDS SEARCHED

| Minimum Documentation Searched | |
|---|---|
| Classification System | Classification Symbols |
| PIC | G09B5/02, G09B11/00, G09B11/10<br>G03B13/00, G03B21/00, G09B15/00 |

Documentation Searched other than Minimum Documentation
to the Extent that such Documents are Included in the Fields Searched

Jitsuyo Shinan Koho, 1929 – 1979

Kokai Jitsuyo Shinan Koho, 1971 – 1978

## III. DOCUMENTS CONSIDERED TO BE RELEVANT

| Category * | Citation of Document, with indication, where appropriate, of the relevant passages | Relevant to Claim No. |
|---|---|---|
| X | JP, Y1, 43-25997, 1968-10-30<br>KABUSHIKI KAISHA SOKKISHA | 1 – 2 |
| A | JP, A  48-32029, 1973-4-27<br>Fujimoto Setsuko | 1 – 2 |
| A | JP, U  50-3661, 1975-1-16<br>Kawamura Masaaki | 1 – 2 |
| A | GB, A, 1135027, 1968-10-27<br>Fig 9, Fig 10, W, P, Exton | 1 – 2 |

* Special categories of cited documents:

"A" document defining the general state of the art

"E" earlier document but published on or after the International filing date

"L" document cited for special reason other than those referred to in the other categories

"O" document referring to an oral disclosure, use, exhibition or other means

"P" document published prior to the International filing date but on or after the priority date claimed

"T" later document published on or after the International filing date or priority date and not in conflict with the application, but cited to understand the principle or theory underlying the invention

"X" document of particular relevance

## IV. CERTIFICATION

| Date of the Actual Completion of the International Search | Date of Mailing of this International Search Report |
|---|---|
| July 5, 1979 (05.07.79) | July 23, 1979 (23.07.79) |
| International Searching Authority | Signature of Authorized Officer |
| Japanese Patent Office | |

Form PCT/ISA/210 (second sheet) (October 1977)